## Europäisches Patentamt
## European Patent Office
## Office européen des brevets

(11) Publication number: **0 054 787**
**B1**

## EUROPEAN PATENT SPECIFICATION

(45) Date of publication of patent specification: **18.09.85**

(51) Int. Cl.⁴: **G 21 C 7/32, G 21 C 15/00**

(21) Application number: **81110145.0**

(22) Date of filing: **04.12.81**

(54) **Spectral shift controlled nuclear reactor.**

(30) Priority: **16.12.80 US 217275**

(43) Date of publication of application:
**30.06.82 Bulletin 82/26**

(45) Publication of the grant of the patent:
**18.09.85 Bulletin 85/38**

(84) Designated Contracting States:
**AT BE CH DE LI SE**

(56) References cited:
**US-A-3 205 144**
**US-A-3 223 589**
**US-A-3 255 087**
**US-A-3 957 577**

(73) Proprietor: **WESTINGHOUSE ELECTRIC CORPORATION**
**Westinghouse Building Gateway Center**
**Pittsburgh Pennsylvania 15222 (US)**

(72) Inventor: **Wilson, John F.**
**3560 Meadowgate Drive**
**Murrysville Pennsylvania (US)**
Inventor: **Sherwood, Donald G.**
**249 Lilac Drive**
**Monroeville Pennsylvania (US)**

(74) Representative: **Holzer, Rupprecht, Dipl.-Ing.**
**Philippine-Welser-Strasse 14**
**D-8900 Augsburg (DE)**

Courier Press, Leamington Spa, England.

## Description

The invention relates to spectral shift reactor control and more particularly to mechanical means for spectral shift reactor control.

In typical nuclear reactors, reactivity control is accomplished by varying the amount of neutron absorbing material (poisons) in the reactor core. Generally, neutron absorbing control rods are utilized to perform this function by varying the number and location of the control rods with respect to the reactor core. In addition to control rods, burnable poisons and poisons dissolved in the reactor coolant can be used to control reactivity.

In the conventional designs of pressurized water reactors, an excessive amount of reactivity is designed into the reactor core at start-up so that as the reactivity is depleted over the life of the core the excess reactivity may be employed to lengthen the core life. Since an excessive amount of reactivity is designed into the reactor core at the beginning of core life, neutron absorbing material such as soluble boron must be placed in the core at that time in order to properly control the excess reactivity. Over the core life, as reactivity is consumed, the neutron absorbing material is gradually removed from the reactor core so that the original excess reactivity may be used. While this arrangement provides one means of controlling a nuclear reactor over an extended core life, the neutron absorbing material used during core life absorbs neutrons and removes reactivity from the reactor core that could otherwise be used in a more productive manner such as in plutonium fuel production. The consumption of reactivity in this manner without producing a useful product results in a less efficient depletion of uranium and greater fuel costs than could otherwise be achieved. In a spectral shift reactor, the life of the reactor core is extended without suppressing excess reactivity with neutron absorbing material thereby providing an extended core life with a signficantly lower fuel cost.

One such method of producing an extended core life while reducing the amount of neutron absorbing material in the reactor core is by the use of "Spectral Shift Control". In one such method as described in US—A—3 205 144 the reduction of excess reactivity (and thus neutron absorbing material) is achieved by withholding a portion of the reactor coolant water until after some time of reactor operation so that the neutron spectrum at the beginning of core life is relatively hard. The shift from a "soft" to a "hard" spectrum results in more neutrons being consumed by $U^{238}$ in a useful manner rather than by poisons. As reactivity is consumed, water displacement elements are gradually removed and at the same rate, water is gradually added so that the reactor core reactivity is maintained at a proper level. Thus, the reactor can be controlled without the use of neutron absorbing material and without the use of excess reactivity at start-up which results in a significant uranium fuel cost savings. The additional plutonium production also reduces the $U^{235}$ enrichment requirements. Such water displacement elements may be moved like the neutron absorbing control rods which utilize mechanisms as shown for example in US—A—4 231 843.

In the operation of a commercial pressurized water reactor it is desirable to be able to prolong the life of the reactor core to better utilize the uranium fuel thereby reducing the fuel costs. The invention described herein provides a means to extend reactor core life by controlling reactor core moderation.

It is the principal object of the present invention to provide a control rod and water displacement rod arrangement for controlling reactor core moderation with reduced uranium fuel costs and an extended reactor core life in a manner which provides for relatively fine adjustment capabilities which will result in relatively even core power distribution.

With this object in view, the present invention resides in a spectral shift controlled pressurized water nuclear reactor as claimed in claim 1.

The invention will become more readily apparent from the following description thereof shown by way of example only, in the accompanying drawings, wherein:

Figure 1 is a cross-sectional view in elevation of the reactor vessel;

Figure 2 is a cross-sectional view in elevation of the top portion of the fuel assembly;

Figure 3 is a cross-sectional view in elevation of the bottom portion of the fuel assembly;

Figure 4 is a view in perspective of displacer rods and their respective fuel assembly;

Figure 5 is a cross-sectional view in elevation of a displacer rod guide structure;

Figure 6 is a view along line VI—VI of Figure 5;

Figure 7 is a diagram of a quarter core of the reactor;

Figure 8 is an enlarged view of a portion of the quarter core;

Figure 9 is an enlarged view of a portion of the quarter core;

Figure 10 is a cross-sectional diagram of a typical fuel assembly; and

Figure 11 is a diagram of a section of the core.

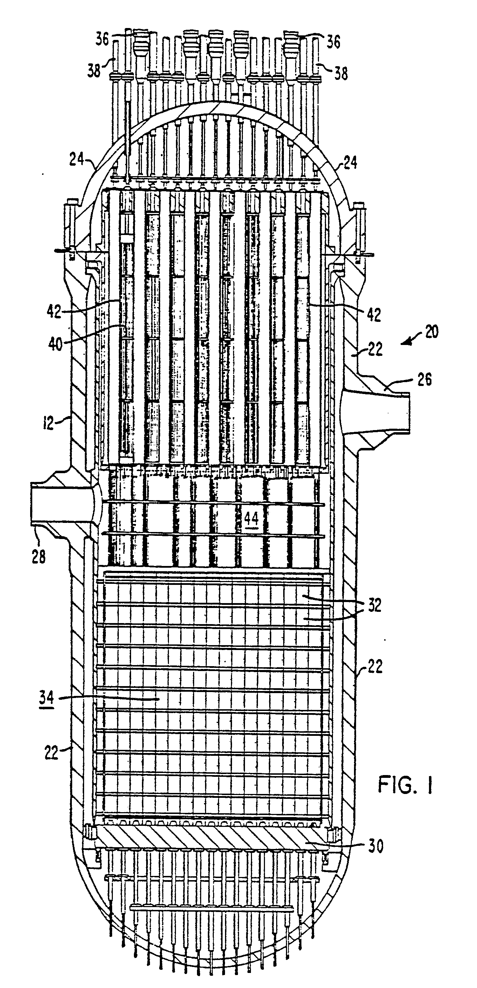

Referring to Figure 1, the nuclear reactor is referred to generally as 20 and comprises a reactor vessel 22 with a removable closure head 24 attached to the top end thereof. An inlet nozzle 26 and an outlet nozzle 28 are connected to reactor vessel 22 to allow a coolant such as water to circulate through reactor vessel 22. A core plate 30 is disposed in the lower portion of reactor vessel 22 and serves to support fuel assemblies 32. Fuel assemblies 32 are arranged in reactor vessel 22 and comprise reactor core 34. As is well understood in the art, fuel assemblies 32 generate heat by nuclear fissioning of the uranium therein. The reactor coolant flowing through reactor vessel 22 in heat transfer relationship with fuel assemblies 32 transfers the heat from fuel assemblies 32 to electrical generating equipment located remote from nuclear reactor 20. A plurality of control rod drive mechanisms 36 which may be chosen from those well known in the art are disposed on closure head 24 for inserting or withdrawing control rods (not shown) from fuel assemblies 32. In addition, a plurality of displacer rod drive mechanisms 38 are also disposed on closure head 24 for inserting or withdrawing displacer rods 40 from fuel assemblies 32. Displacer rod drive mechanism 38 may be similar to the one described in copending European United States Patent Application 81110146.8 (EP—A—0054788), entitled "Hydraulic Drive Mechanism" and assigned to the Westinghouse Electric Corporation. For purposes of clarity, only a selected number of displacer rods 40 are shown in Figure 1. However, it should be understood, that the number of displacer rods 40 are chosen to correspond to the number of displacer rod guide tubes in fuel assemblies 32. A plurality of displacer rod guide structures 42 are located in the upper section of reactor vessel 22 with each being in alignment with a displacer rod drive mechanism 38 for guiding the movement of displacer rods 40 through the upper section of reactor vessel 22. A calandria 44 may be arranged between fuel assemblies 32 and displacer rod guide structures 42 and comprises a multiplicity of hollow stainless steel tubes arranged in colinear alignment with each displacer rod and control rod for providing guidance of the displacer rods and control rods through the calandria area and for minimizing flow induced vibrations in the displacer rods and control rods.

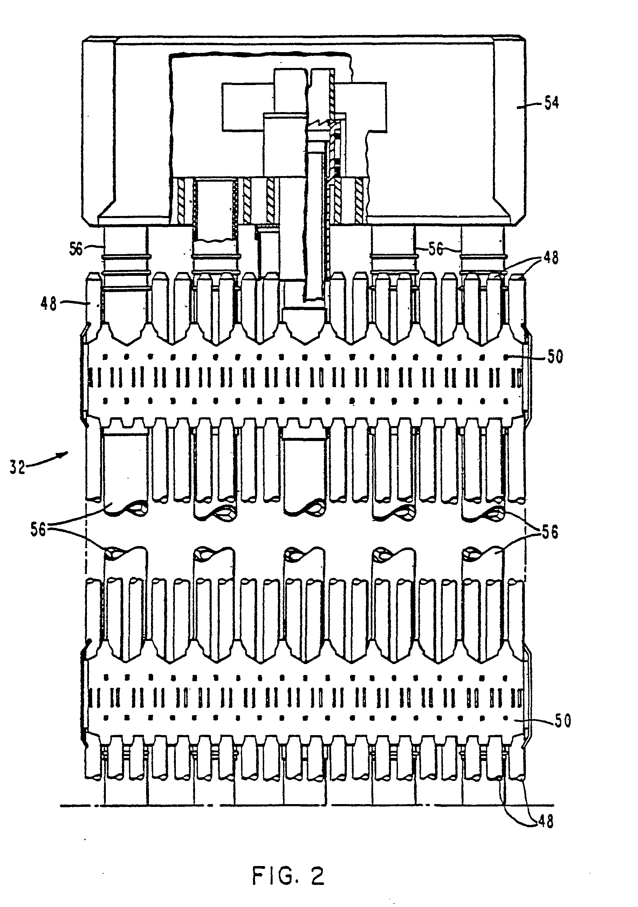

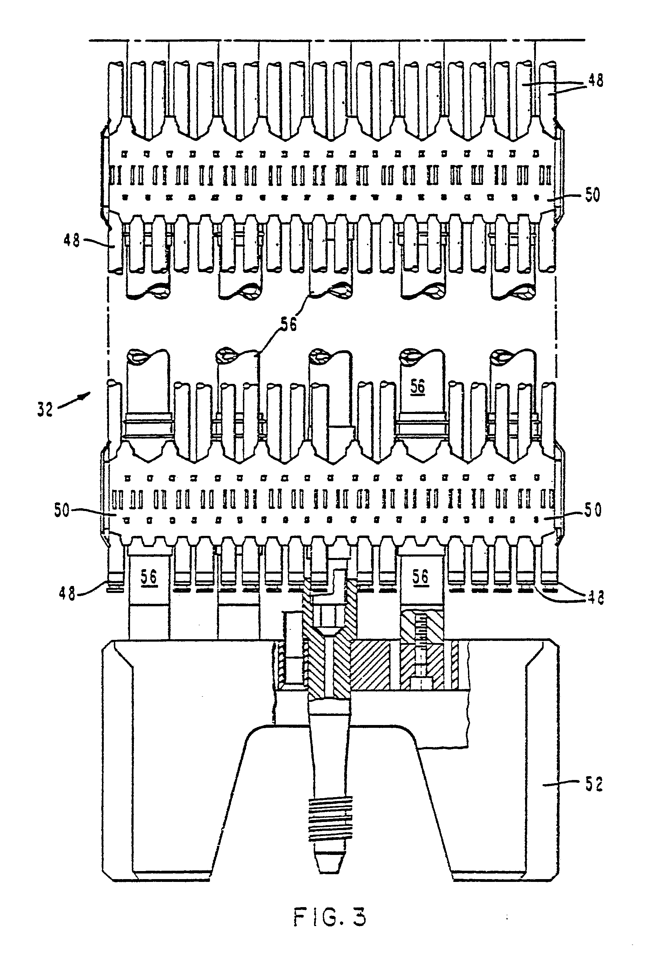

Referring now to Figures 2—4, fuel assemblies 32 comprise fuel elements 48, grids 50, bottom nozzle 52, top nozzle 54, and guide tubes 56. Fuel elements 48 may be elongated cylindrical metallic tubes containing nuclear fuel pellets and having both ends sealed by end plugs. Fuel elements 48 may be arranged in a substantially $20 \times 20$ rectangular array and are held in place by grids 50. Guide tubes 56 which may number 25 are arranged in a generally $5 \times 5$ array within each fuel assembly 32. Each guide tube 56 occupies the space of about four fuel elements 48 and extend from bottom nozzle 52 to top nozzle 54 and provide a means to support grids 50, top nozzle 54 and bottom nozzle 52. Guide tube 56 may be hollow cylindrical metallic tubes manufactured from Zircaloy and capable of accommodating rods such as displacer rods 40 or control rods. Displacer rods 40 and control rods are manufactured to be approximately the same size so that each guide tube 56 can equally accommodate either a displacer rod or a control rod. When not occupied by a rod, guide tubes 56 are filled with reactor coolant; however, when displacer rods 40 are inserted in guide tubes 56 displacer rods 40 displace the coolant therein.

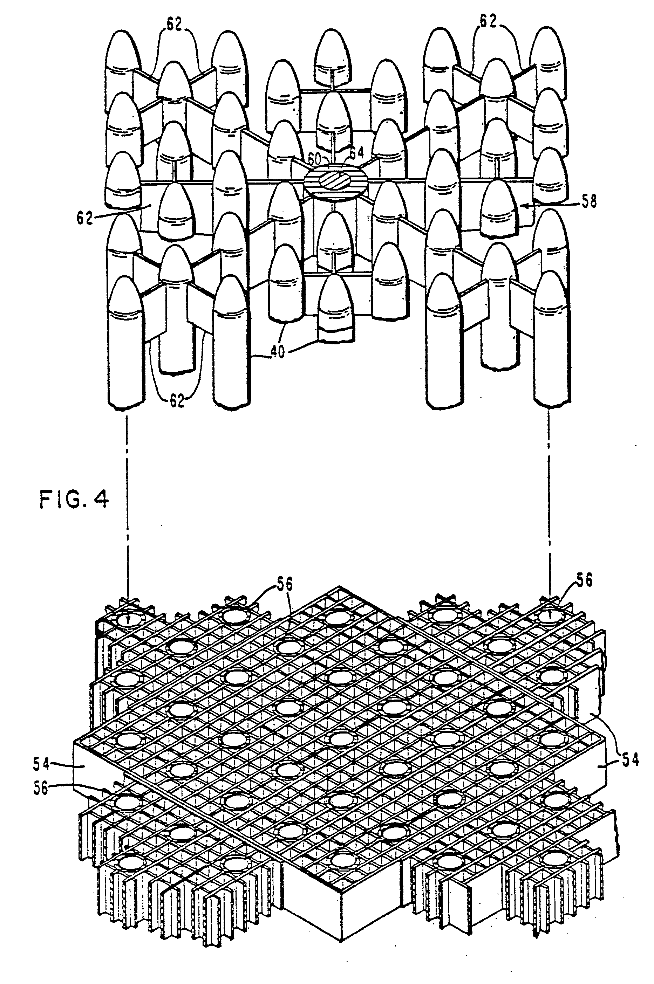

Grids 50 are positioned at various locations along the length of fuel assembly 32 and serve to space fuel elements 48 and guide tubes 56 at appropriate distances from each other and to allow the reactor coolant to circulate in heat transfer relationship with fuel elements 48. A more detailed description of a similar grid may be found in US—A—3,379,617 and US—A—3,379,619. As can be seen in Figure 4, displacer rods 40 are elongated cylindrical substantially hollow rods of the type described in copending European Patent Application 81110143.5. EP.A1.0054237, "Displacer Rod For Use In A Mechanical Spectral Shift Reactor". Displacer rods 40 may also contain $ZrO_2$ or $Al_2O_3$ pellets for weighting the rod and enhancing its lowerability. Displacer rods 40 are arranged so as to be in colinear alignment with guide tube 56 so that displacer rods 40 may be inserted in guide tubes 56 when it is desired. Displacer rods 40 are supported from a common attachment known as a spider 58. Spider 58 comprises a body 60 with struts 62 radially extending from body 60. Displacer rods 40 are individually attached to each strut 62 to form an array corresponding to the array of guide tubes 56 into which displacer rods may be inserted. Spider 58 is attached to drive shaft 64 which is connected to displacer rod drive mechanism 38. Activation of displacer rod drive mechanism 38 causes drive shaft 64 to be either lowered or raised thereby inserting or withdrawing displacer rods 40 from fuel assemblies 32 of core 34.

It is important to note that each spider 58 is arranged to be able to insert displacer rods 40 into more than one fuel assembly 32. For example, as shown in Figure 4, spider 58 is capable of inserting 25 displacer rods in center fuel assembly 32 and 4 displacer rods in each of the adjacent 4 fuel assemblies. In this manner displacer rods 40 can be moved in and out of fuel assemblies 32 without increasing the number of spiders and drive mechanisms.

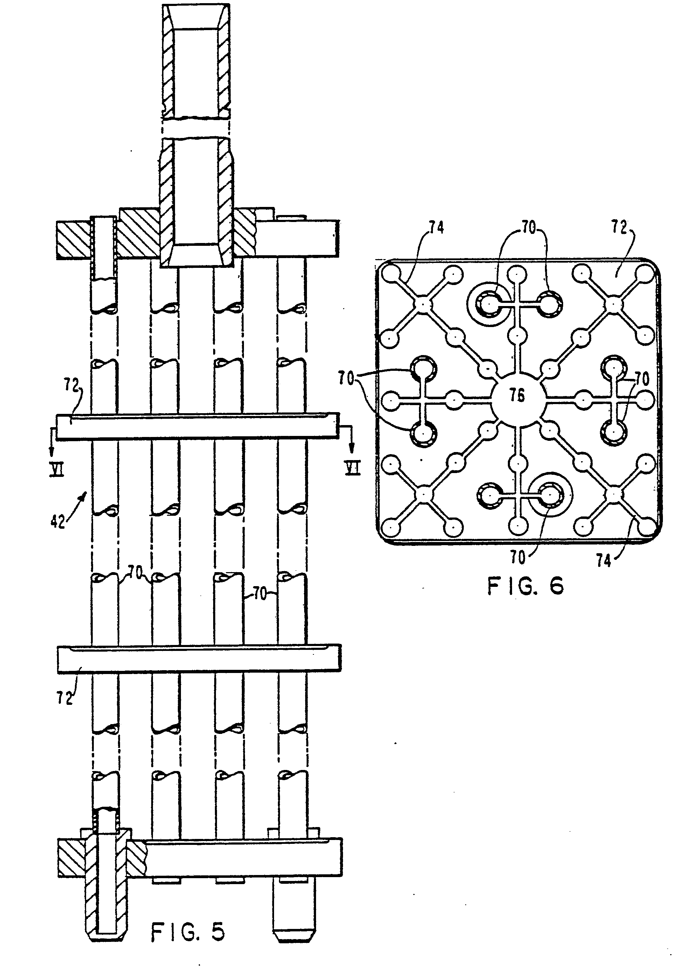

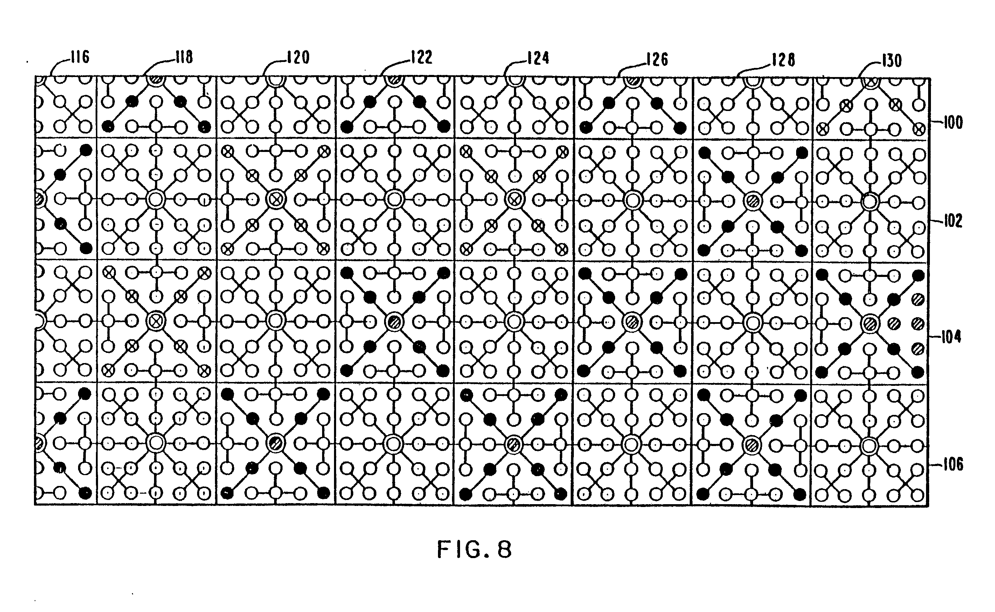

Referring now to Figures 5 and 6, displacer rod guide structures 42 comprise a plurality of split tube guides 70 which are designed to allow rods such as displacer rods or control rods to pass therethrough. Displacer rod guide structures 42 are located between calandria 44 and closure head 24 as shown in Figure 1 and are arranged to correspond to each displacer rod drive mechanism 38. A number of spacers 72 are located at various locations along split tube guides 70 and together with split tube guides 70 serve to guide displacer rods 40 through the upper section of reactor vessel 22. As can be seen in Figure 6, 8 split tube guides 70 may be provided for guiding displacer rods 40. The "split" in split tube guides 70 along with slots 74 in spacers 72 allow spider 58 to pass therethrough while maintaining alignment of the rods with guide tubes 56 in fuel assemblies 32. A center slot 76 is also provided for accommodating drive shaft 64 so that spider 58 may be moved therethrough.

Referring again to Figure 1, calandria 44 which comprises a multiplicity of tubes provides guidance for the rods such as displacer rods 40 through the calandria area. In general, the tubes in calandria 44 are not split tubes, as are split tube guides 70, so that spider 58 stops its descent when spider 58 nears the top of the tubes in calandria 44. When stopped at the top of calandria 44 all rods extend through the calandria tubes and are fully inserted in fuel assembly 32. While inserted in the calandria tubes, the rods are protected from the flow of reactor coolant thereby minimizing vibrations that would otherwise be induced by the velocity of the reactor coolant in that area.

In the invention as described herein, two different types of rods are provided for insertion into guide tubes 56. For example, displacer rods and control rods may be arranged to be inserted into guide tubes 56. All of the rods are approximately the same size and configuration, but because of the materials with which they are made serve different purposes. Displacer rods 40 which may be either a hollow thick walled tube or may contain a low neutron absorbing material such as $ZrO_2$ or $Al_2O_3$ pellets are used to displace reactor coolant and thereby control reactor moderation. Control rods contain neutron absorbing material as is well understood in the art and serve to control core reactivity in a commonly understood fashion. There may also be gray rods which are similar to displacer rods 40 but are made of an intermediate neutron absorbing material such as stainless steel so that their reactivity worth per rod is greater than that of displacer rods 40.

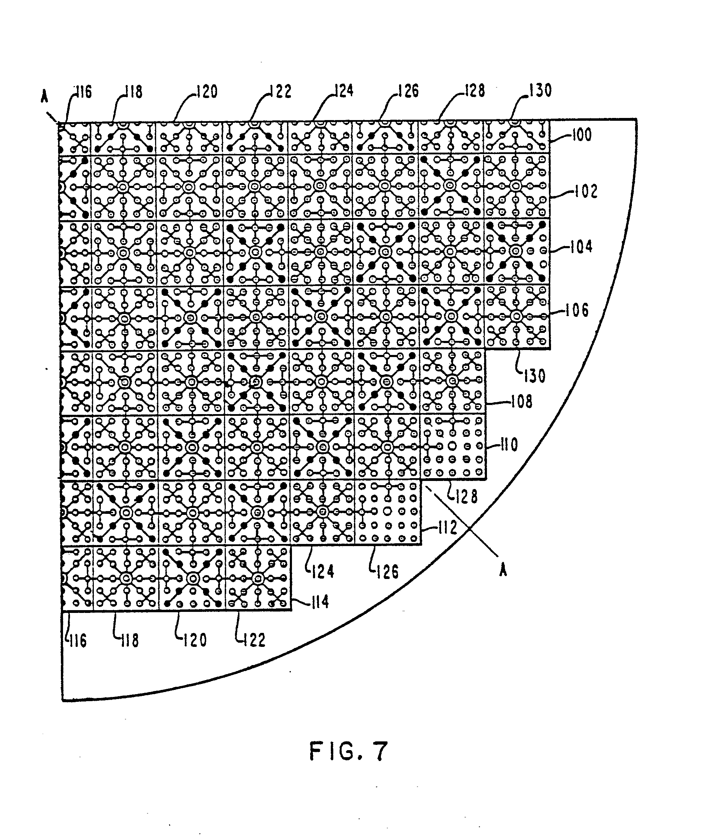

Referring now to Figures 7—11, the quarter core arrangement of fuel elements 48, displacer rods 40, control rods 80, gray rods 82, and unrodded locations 84 are shown. It is to be understood that the full reactor core configuration can be established by extrapolating the quarter core shown in Figure 7. Actually, the quarter core shown in Figure 7 is a mirror image of the eighth core taken along line A—A of Figure 7. However, the quarter core of Figure 7 is being shown for clarity.

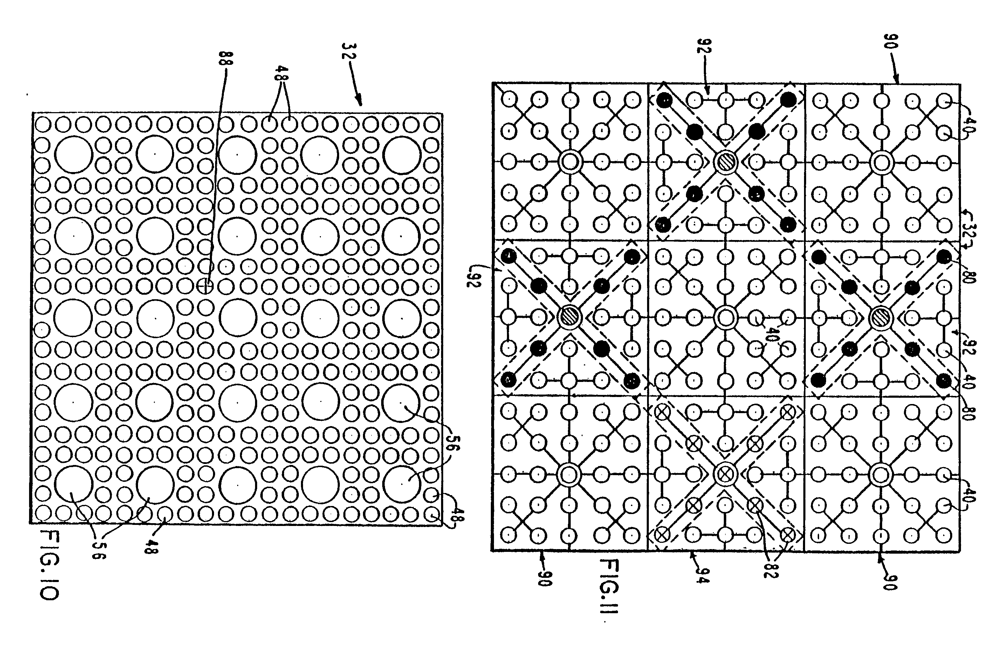

As can be seen in Figre 10, each fuel assembly 32 comprises an array of fuel elements 48 and an array of guide tubes 56. Generally, control rods 80 and gray rods 82 are used only in the diagonally arranged guide tubes 56 while displacer rods 40 are generally used in all guide tubes 56 of a given fuel assembly. In addition, an instrument tube 88 is provided near the center of each fuel assembly 32 for accommodating data instrumentation such as movable fission chambers. While each fuel assembly 32 is essentially identical to the one shown in Figure 10, each fuel assembly 32 can produce a different function depending on whether guide tubes 56 are occupied by reactor coolant, displacer rods 40, control rods 80, or gray rods 82. Displacer rods 40 and gray rods 82 are generally chosen to be approximately the same size so as to displace approximately the same volume of water. However, gray rods 82 can be thick walled stainless steel cylindrical rods which can have higher worths per rod than do displace rods 40 so that they may be used to offset the effects of Xenon transients during load follow operations.

Referring now to Figure 11, a fuel assembly 32 in which no control rods 80 or gray rods 82 are used and in which only displacer rods 40 are used in guide tubes 56 is referred to generally as displacer assembly 90. A fuel assembly 32 in which both displacer rods 40 and control rods 80 are employed (but no gray rods) is referred to as control assembly 92. Similarly, a fuel assembly 32 in which both displacer rods 40 and gray rods 82 are used is called a gray assembly 94. It should be noted that in Figure 11 fuel elements 48 have been omitted for clarity and that fuel assemblies are similar to those shown in Figure 10.

Still referring to Figure 11, each of the control rods 80 and gray rods 82 are attached to a spider (not shown) similar to spider 58 except that a spider for control rods 80 or gray rods 82 is associated only with one fuel assembly. In this manner, all control rods 80 or gray rods 82 in a given fuel assembly can be raised or lowered by a single drive mechanism. Furthermore, since each displacer rod spider 58 can extend into the adjacent fuel assemblies (as illustrated in the center portion of Figure 11 and in Figure 4), the displacer rod spider's 58 movement affects the control on five fuel assemblies and reduces the number of displacer rod drive mechanisms needed. Of course, on the periphery of the quarter core (as shown in Figure 7) the particular spiders may move less than the usual number of rods because there are no adjacent fuel assemblies or there are unrodded locations 84.

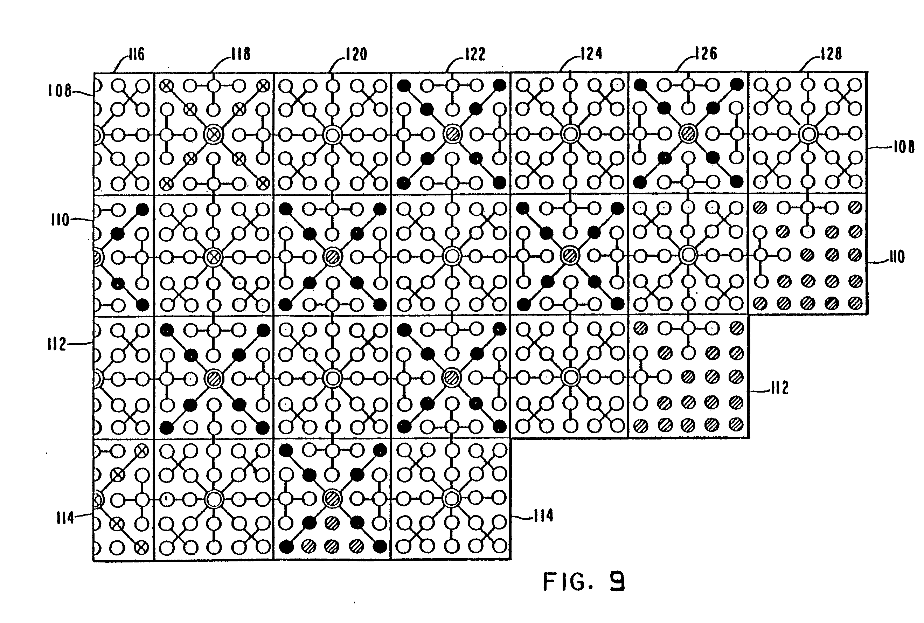

Referring again to Figures 8 and 9 which comprise Figure 7, a quarter core arrangement. Each row or partial row is numbered 100—114 and each column or partial column is numbered 116—130 and comprises:

Fuel assembly

| | |
|---|---|
| (100, 116) | quarter displacer assembly |
| (100, 118) | half control assembly |
| (100, 120) | half displacer assembly |
| (100, 122) | half control assembly |
| (100, 124) | half displacer assembly |
| (100, 126) | half control assembly |
| (100, 128) | half displacer assembly |
| (100, 130) | half gray assembly |
| (102, 116) | half control assembly |
| (102, 118) | full displacer assembly |
| (102, 120) | full gray assembly |
| (102, 122) | full displacer assembly |
| (102, 124) | full gray assembly |
| (102, 126) | full displacer assembly |
| (102, 128) | full control assembly |
| (102, 130) | full displacer assembly |
| (104, 116) | half displacer assembly |
| (104, 118) | full gray assembly |
| (104, 120) | full displacer assembly |
| (104, 122) | full control assembly |
| (102, 124) | full displacer assembly |
| (104, 126) | full control assembly |
| (104, 128) | full displacer assembly |
| (104, 130) | partial control-unrodded assembly |

Fuel assembly

(106, 116)  half control assembly
(106, 118)  full displacer assembly
(106, 120)  full control assembly
(106, 122)  full displacer assembly
(106, 124)  full control assembly
(106, 126)  full displacer assembly
(106, 128)  full control assembly
(106, 130)  full displacer assembly

(108, 116)  half displacer assembly
(108, 118)  full gray assembly
(108, 120)  full displacer assembly
(108, 122)  full control assembly
(108, 124)  full displacer assembly
(108, 126)  full control assembly
(108, 128)  full displacer assembly
(110, 116)  half control assembly
(110, 118)  full displacer assembly
(110, 120)  full control assembly
(110, 122)  full displacer assembly
(110, 124)  full control assembly
(110, 126)  full displacer assembly
(110, 128)  partial displacer unrodded
            assembly

(112, 116)  half displacer assembly
(112, 118)  full control assembly
(112, 120)  full displacer assembly
(112, 122)  full control assembly
(112, 124)  full displacer assembly
(112, 126)  partial displacer unrodded
            assembly

(114, 116)  half gray assembly
(114, 118)  full displacer assembly
(114, 120)  partial control unrodded assembly
(114, 122)  full displacer assembly

As can be seen from the above description of the quarter core, the core configuration based on this concept can be illustrated generally as shown in Figure 11. Basically, the fuel assembly in the center of the full core as represented by fuel assembly (100, 116) in Figure 7 can be chosen to be either a control assembly 92 or preferably a displacer assembly 90. Once this is chosen, the four fuel assemblies immediately adjacent to the flat sides of the center fuel assembly are chosen to be the other type and the fuel assemblies on the diagonal are chosen to be the same type as the center assembly. This pattern is then continued in an alternating fashion. For example, the center fuel assembly (100, 116) in Figure 7 was chosen to be a displacer assembly 90 so that the fuel assemblies on its adjacent flat sides are chosen to be either control assemblies 92 or gray assemblies 94 while those on the diagonal are chosen to be displacer assemblies 90. This pattern is repeated in alternating fashion until the periphery of the core is reached where the end fuel assemblies may be chosen to be hybrid assemblies based on the nuclear physics of the particular core. Whether a particlar assembly is chosen to be a control assembly 92 or a gray assembly 94 is determined by first selecting the number and location of control assemblies needed based on conventional core design. The remainder of the assemblies not chosen to be control assemblies 92 are then used as gray assemblies 94. Thus, substantially the entire core can be arranged on an alternating pattern of displacer assemblies and control or gray assemblies with practically all the fuel assemblies being served by at least one displacer rod spider 58 and with each displacer rod spider 58 serving generally 5 fuel assemblies. Moreover, each fuel assembly is served by at least one drive mechanism for either displacer rods, control rods or gray rods.

The illustrated core arrangement provides a means by which the neutron spectrum can be controlled in a "spectral shift" fashion by controlling the moderator volume in the core. This can be accomplished by displacing and replacing the water coolant in the core at appropriate times thereby changing the moderation of the core. In the present invention, displacer rods 40 and gray rods 82 can be used to effect this moderation change.

In operation, all displacer rods 40 and gray rods 82 are inserted in core 34 at the beginning of the core life. However, none of the control rods 80 need be inserted at that time. The insertion of displacer rods 40 and gray rod 82 is done by activating the appropriate drive mechanism such as displacer rod drive mechanism 38. When the drive mechanism is activated, displacer rods 40 and gray rods 82 fall into the appropriate guide tubes 56 in fuel assemblies 32. The displacer rods and gray rods will displace their volume of coolant (water) thus reducing the volume of moderator in core 34. The reduction of moderator hardens the neutron spectrum of the core and increases the plutonium production. This hardening of the neutron spectrum is generally referred to as "spectral shift". The harder neutron spectrum reduces boron chemical shim requirements, results in a more negative moderator temperature coefficient, and reduces or eliminates burnable poison requirements. As the uranium fuel in the core is depleted over the life of the core, a certain number of displacer rods 40 and/or gray rods 82 may be withdrawn from the core by activating their respective drive mechanisms. The withdrawal of the rods allows more water-moderator into the core region and increases moderation of the core. This, in effect, introduces reactivity worth at a time when fuel depletion is causing a reactivity worth depletion. Thus, the reactivity of the core can be maintained at appropriate levels for a longer time. The withdrawal of the rods can continue at a selective rate (depending on core conditions) until, near the end of core life, all displacer rods 40 and all gray rods 82 have been withdrawn from the core.

The displacer rods can be used at start-up to displace approximately 20% of the core water volume and can remain inserted until the boron shim concentration near zero ppm which is approximately 60% into the fuel cycle. The use of displacer rods in this manner can result in approximately 10% reduction in uranium fuel requirements for a given core life which results in an 10% fuel cost savings. In addition, the use of burnable poison rods can be effectively eliminated resulting in a further cost reduction.

## Claims

1. A spectral shift controlled pressurized water nuclear reactor having a reactive core (34) disposed in a vessel (22) with a closure head (24) and comprising a plurality of nuclear fuel assemblies (32) disposed in said core (34) adjacent each other and capable of accommodating reactor control elements (40, 80, 82), characterized in that some of said assemblies (32) ("displacer assemblies" (90)) have water displacement control elements (40) associated therewith and some others of said assemblies (32) ("control assemblies (92) and "gray assemblies" (94) resp.) have neutron absorbing control rods (80 and 82 resp.) associated therewith for controlling the reactivity of said core (34), that displacer element and control rod drive means (36, 38) mounted on top of the reactor vessel (22) are connected to said water displacement control elements (40) and to said control rods (80 and 82 resp.) for insertion or withdrawal thereof in groups movable together and that said displacer assemblies (90) and said other assemblies (92 and 94 resp.) are arranged in said core (34) in alternating fashion, and at least one of said groups of water displacement control elements (40) extends from one (90) of said assemblies (32) into all the adjacent assemblies (92 and 94 resp.).

2. A nuclear reactor according to claim 1, characterized in that each of said displacer element drive means (36) has forty one water displacement control elements (40) associated therewith.

3. A nuclear reactor according to claim 1, characterized in that said nuclear fuel assemblies (32) comprise fuel elements (48) containing nuclear fuel and being arranged in a substantially regular array, hollow metal guide tubes (56) arranged among said fuel elements (48) for accommodating one of said water displacement control elements (40) and control rods (80 and 82 resp.), and grids (50) connected to said guide tubes (56) for supporting and aligning said fuel elements (48) with respect to said guide tubes (56).

4. A nuclear reactor according to claim 1, 2 or 3, characterized in that said displacer element drive means (36) comprises a spider (58) to which said water displacement control elements (40) are attached for moving said elements (40) simultaneously, a drive shaft (64) attached to said spider (58) and extending through said closure head (24), and that said drive mechanism (36) mounted on said closure head (24) is connected to said drive shaft (64) for inserting and withdrawing said elements (40) from said fuel assemblies (32).

## Revendications

1. Réacteur nucléaire à eau sous pression et à commande par dérive spectrale, comportant un coeur réactif (34) enfermé dans une cuve (22) comprenant une tête de fermeture (24) et contenant plusieurs assemblages combustibles nucléaires (32) placés côté à côte dans le coeur (34) et pouvant recevoir des éléments (40, 80, 82) de commande du réacteur, caractérisé en ce qu'à certains de ces assemblages (32) ("assemblages de déplacement" (90)) sont associés des éléments de commande (40) de déplacement d'eau, tandis, qu'à d'autres de ces assemblages (32) ("assemblages de commande" (92) et "assemblages gris" (94) respectivement) sont associées des barres de commande d'absorption des neutrons (respectivement 80 et 82) pour ajuster la réactivité du coeur (34), en ce que des moyens de translation (36, 38) des éléments de déplacement et des barres de commande, montés à la partie supérieure de la cuve (22) du réacteur sont reliés aux éléments de commande (40) de déplacement d'eau et aux barres de commande (respectivement 80 et 82) pour leur introduction ou leur retrait par groupes mobiles simultanément, et en ce que les assemblages de déplacement (90) et les autres assemblages (respectivement 92 et 94) sont montés d'une manière alternée dans le coeur (34), au moins l'un de ces groupes d'éléments de commande (40) de déplacement d'eau s'étendant depuis l'un (90) de ces assemblages (32) jusque dans les assemblages adjacents (respectivement 92 et 94).

2. Réacteur nucléaire suivant la revendication 1, caractérisé en ce qu'à chacun des moyens de translation (36) des éléments de déplacement sont associés quarante et un éléments de commande (40) de déplacement d'eau.

3. Réacteur nucléaire suivant la revendication 1, caractérisé en ce que les assemblages combustibles nucléaires (32) comprennent quatre éléments (48) contenant du combustible nucléaire et agencés suivant un réseau essentiellement régulier, des tubes de guidage métalliques creux (54) agencés parmi les éléments combustibles (48) pour recevoir l'un des éléments de commande (40) de déplacement d'eau et des barres de commande (respectivement 80 et 82), et des sommiers (50) reliés aux tubes de guidage (56) pour supporter et aligner les éléments combustibles (48) par rapport aux tubes de guidage (56).

4. Réacteur nucléaire suivant la revendication 1, 2 ou 3, caractérisé en ce que les moyens de translation (36) des éléments de déplacement comprennent un croisillon (58) auquel les éléments de commande (40) de déplacement d'eau sont attachés pour le déplacement simultané de ces éléments (40), une barre de translation (64) attachée au croisillon (58) et s'étendant à travers la tête de fermeture (24), et en ce que le mécanisme de translation (36) monté sur cette tête de fermeture (24) est relié à la barre de translation (64) pour l'introduction de ces éléments (40) dans les assemblage combustibles (32) et pour leur retrait hors de ceux-ci.

## Patentansprüche

1. Durch Spektralverschiebung gesteuerter Druckwasser-Kernreaktor mit einem reaktiven Kern (34), der in einen Behälter (22) mit einem Behälterdeckel (24) angeordnet ist und eine Vielzahl von Kernbrennelementen (32) aufweist, die nebeneinander in diesem Kern (34) angeordnet sind und Reaktorsteuerelemente (40, 80, 82) aufnehmen können, dadurch gekennzeichnet, daß einigen der Brennelemente (32) ("Verdrängerelemente" (90)) Wasserverdränger-Steuerelemente (40) zugeordnet sind und einigen anderen der Brennelemente (32) ("Steuerelemente" (92) bzw. "graue Elemente" (94)) neutronenabsorbierende Steuerstäbe (80 bzw. 82) zur Steuerung der Reaktivität des Kerns (34) zugeordnet sind, daß weiter Verdrängerelement- und Steuerstab-Antriebsmittel (36, 38) auf dem Reaktorbehälter (22) montiert und mit den Wasserverdränger-Steuerelementen (40) und den Steuerstäben (80 bzw. 82) verbunden sind, um diese gruppenweise gemeinsam einschieben oder herausziehen zu können, und daß die genannten anderen Brennelemente (92 bzw. 94) in alternierendem Muster im Kern (34) angeordnet sind und mindestens eine der genannten Gruppe von Wasserverdränger-Steuerelementen (40) sich von einem (90) der genannten Brennelemente (32) in alle benachbarten Brennelemente (92 bzw. 94) hineinerstreckt.

2. Kernreaktor nach Anspruch 1, dadurch gekennzeichnet, daß den Verdrängerelement-Antriebsmitteln (36) jeweils 41 Wasserverdränger-Steuerelemente (40) zugeordnet sind.

3. Kernreaktor nach Anspruch 1, dadurch gekennzeichnet, daß die Kernbrennelemente (32) Kernbrennstoff enthaltende Brennstäbe (48), die in im wesentlichen regelmäßiger Anordnung angeordnet sind, weiter zwischen diesen Brenn-stäber (48) angeordnete hohle metallene Führungsrohre (56) zur Aufnahme jeweils eines der Wasserverdränger-Steuerelemente (40) bzw. einem der Steuerstäbe (80 bzw. 82) und mit den Führungsrohren (56) verbundene Gitter (50) zum Halten und Ausrichten der Brennstäbe (48) mit Bezug auf die Führungsrohre (56) aufweisen.

4. Kernreaktor nach Anspruch 1, 2 oder 3, dadurch gekennzeichnet, daß die Verdrängerelement-Antriebsmittel (36) einen Stern (58), an welchem die Wasserverdränger-Steuerelemente (40) zum gleichzeitigen Bewegen dieser Elemente (40) befestigt sind, und eine an dem Stern (58) befestigte und durch den Behälterdeckel (24) hindurchverlaufende Antriebsstange (64) aufweisen, und daß der auf dem Behälterdeckel (24) montierte Antriebsmechanismus (36) mit der Antriebsstange (64) verbunden ist, um die genannten Elemente (40) in die Brennelemente (32) einzuschieben bzw. aus diesen heraus-zuziehen.

FIG. I

FIG. 2

FIG. 3

FIG. 4

FIG. 5

FIG. 6

FIG. 7

FIG. 8

7

FIG. 9

FIG.II

FIG.IO